# FASCICULE DE BREVET EUROPEEN

(11) **EP 3 876 096 B1**
(45) Date de publication et mention de la délivrance du brevet: **24.04.2024**
(21) Numéro de dépôt: 21157793.7
(22) Date de dépôt: 18.02.2021
(51) Int. Cl.: G06F 9/4401, G06F 9/48, G06F 21/57

(54) **PROCÉDÉ MIS EN OEUVRE DANS UN MODULE À CIRCUIT INTÉGRÉ, MODULE À CIRCUIT INTÉGRÉ CORRESPONDANT, SYSTÈME COMPORTANT UN TEL MODULE ET PROGRAMME D'ORDINATEUR ASSOCIÉ**
PROZESS, DER IN EINEM INTEGRIERTEN SCHALTUNGSMODUL, DEM ENTSPRECHENDEN INTEGRIERTEN SCHALTUNGSMODUL, EINEM SYSTEM EINSCHLIESSLICH EINES SOLCHEN MODULS UND EINES ZUGEHÖRIGEN COMPUTERPROGRAMMS IMPLEMENTIERT WIRD
PROCESS IMPLEMENTED IN AN INTEGRATED CIRCUIT MODULE, CORRESPONDING INTEGRATED CIRCUIT MODULE, SYSTEM INCLUDING SUCH A MODULE AND ASSOCIATED COMPUTER PROGRAM

(30) Priorité: 05.03.2020 FR 2002251
(43) Date de publication de la demande: 08.09.2021
(73) Titulaire: IDEMIA France, 92400 Courbevoie (FR)
(72) Inventeur: DOS SANTOS, Elder, 92400 COURBEVOIE (FR)
(74) Mandataire: Barreau, Cédric

(56) Documents cités:
- EP-A1- 2 492 810
- EP-A1- 3 547 195
- EP-B1- 3 547 195
- US-A1- 2015 268 968

## Description

### Domaine technique

La présente invention concerne le domaine technique des modules à circuit intégré. L'invention concerne notamment le domaine des modules à circuit intégré comportant plusieurs logiciels de définition de contexte d'exécution.

L'invention concerne tout particulièrement un procédé mis en oeuvre dans un module à circuit intégré, un module à circuit intégré correspondant, un système comprenant un module à circuit intégré selon l'invention et un dispositif électronique, ainsi qu'un programme d'ordinateur mettant en oeuvre le procédé selon l'invention.

### Arrière-plan technologique

Un module à circuit intégré permet classiquement l'implémentation d'un logiciel de définition de contexte, c'est-à-dire un logiciel configuré pour permettre l'accès à des services de façon sécurisée, en coopération avec un dispositif électronique.

Par exemple, un module à circuit intégré peut être une carte à puce amovible, par exemple une carte SIM (« Subscriber Identity Module », ou module d'identité d'abonné, selon l'acronyme Anglo-Saxon couramment employé) ou une carte bancaire, et être adapté à s'insérer de façon amovible dans un dispositif électronique, par exemple un téléphone portable intelligent ou un terminal de paiement bancaire. Le module à circuit intégré se présente parfois sous la forme d'une puce électronique intégrée de façon fixe, notamment soudée au dispositif électronique; dans le cas d'une carte SIM, on parle alors d'eSIM (« embedded SIM » en anglais, ou « SIM embarquée » en français), ou bien d'iSIM (« integrated SIM » en anglais, ou « SIM intégrée » en français). Dans certains cas, l'iSIM est comprise dans un SoC (« System on Chip » en anglais, ou « système sur puce » en français).

Le logiciel de définition de contexte d'exécution comporte par exemple des données d'identification utilisateur, des données d'identification constructeur et des clés de chiffrement permettant d'établir une connexion sécurisée avec le dispositif électronique ou d'avoir accès à certains services.

Par exemple, dans le domaine de la téléphonie, le module à circuit intégré est une carte SIM et le logiciel de définition de contexte d'exécution permet de définir un « profil de communication ». Il permet d'établir une connexion sécurisée à un réseau téléphonique géré par un opérateur déterminé.

Dans d'autres applications, par exemple les applications bancaires, le module à circuit intégré est une carte à puce bancaire et le logiciel de définition de contexte permet la réalisation d'opération de paiement de façon sécurisée en coopération avec un terminal de paiement bancaire.

Il existe des dispositifs électroniques adaptés à recevoir plusieurs éléments sécurisés. Par exemple, certains téléphones portables intelligents comportent deux ports de carte SIM, ce qui permet au téléphone d'accéder à plusieurs logiciels de définition de contexte et donc de communiquer avec plusieurs réseaux téléphoniques.

Il existe en outre des modules à circuit intégré configurés pour implémenter plusieurs logiciels de définition de contexte. Ainsi, un même module à circuit intégré peut comporter deux logiciels d'exécution de contexte. Cela permet avantageusement de s'affranchir de l'utilisation de plusieurs modules à circuits intégré et donc de gagner de la place.

Il existe notamment dans ce cadre des modules à circuit intégré configurés pour implémenter des logiciels de définition de contexte relatifs à des domaines d'application distincts. Par exemple, un même module à circuit intégré peut implémenter un premier logiciel de définition de contexte qui est un profil de communication adapté à établir une communication sécurisée avec un réseau téléphonique déterminé et un deuxième logiciel de définition de contexte qui peut être un profil bancaire adapté à réaliser des transactions bancaires.

Cependant, la gestion des différents logiciels par un même dispositif électronique et/ou par un même module à circuit intégré implique actuellement la mise en oeuvre de mécanismes classiques d'ouverture et de fermeture de session qui empêchent toute utilisation concurrente de ces différents logiciels.

La demande de brevet publiée sous le numéro EP 3 547 195 A1 divulgue un système sur puce et un procédé de changement de systèmes d'exploitation sécurisés.

La demande de brevet publiée sous le numéro EP 2 492 810 A1 divulgue un procédé et dispositif permettant de gérer des systèmes d'exploitation dans un système intégré.

La demande de brevet publiée sous le numéro US 2015/268968 divulgue une technique de changement de système d'exploitation.

Face à l'augmentation du nombre de logiciels de définition de contexte d'exécution pouvant être implémentés sur un même module à circuit intégré et face à la variété de leurs domaines d'application, il est nécessaire de mettre en place des moyens de gestion simples et fiables de ces logiciels.

### Résumé de l'invention

L'invention répond à ce besoin en proposant un procédé permettant d'accéder aux différents logiciels de définition de contexte d'exécution de façon séquentielle. Ce procédé peut être mis en oeuvre par le processeur d'un module à circuit intégré qui exécute un programme d'ordinateur correspondant.

Selon un aspect de l'invention, il est proposé un procédé mis en oeuvre dans un module à circuit intégré comprenant un processeur configuré pour accéder à une mémoire non-volatile dans laquelle sont mémorisés une pluralité de logiciels de définition de contexte d'exécution adaptés à être exécutés par le processeur pour une communication avec un dispositif électronique, et pour accéder à une mémoire volatile configurée pour stocker des données d'exécution d'un logiciel de définition de contexte d'exécution en cours d'exécution, la pluralité de logiciels de définition de contexte d'exécution comprenant un premier logiciel de définition de contexte d'exécution en cours d'exécution et un deuxième logiciel de définition de contexte d'exécution précédemment suspendu, le procédé comprenant, à réception d'une commande du dispositif électronique,
a. une suspension de l'exécution du premier logiciel de définition de contexte d'exécution en cours d'exécution comprenant
   i. une sauvegarde du contenu de la mémoire volatile dans un premier emplacement de sauvegarde de la mémoire non-volatile,
   ii. un arrêt de l'exécution du premier logiciel de définition de contexte d'exécution,
b. une reprise de l'exécution précédemment suspendue du deuxième logiciel de définition de contexte d'exécution comprenant
   i. un transfert dans la mémoire volatile, depuis un deuxième emplacement de sauvegarde de la mémoire non-volatile, de données d'exécution relatives à l'exécution précédemment suspendue du deuxième logiciel de définition de contexte d'exécution, et
   ii. une exécution du deuxième logiciel de définition de contexte d'exécution, le procédé comportant un effacement du contenu du deuxième emplacement de sauvegarde à la suite de la reprise d'exécution du deuxième logiciel de définition de contexte d'exécution.

Grâce à l'invention, il est donc possible de gérer de façon simple et fiable plusieurs logiciels de définition de contexte d'exécution, en assurant notamment la sauvegarde de leur contexte d'exécution dans la mémoire non volatile.

La pluralité de logiciels de définition de contexte d'exécution peut comporter au moins un logiciel de définition de profil de communication.

Le module à circuit intégré peut comporter ladite mémoire volatile et/ou ladite mémoire non volatile.

Un effacement du contenu de l'emplacement de sauvegarde permet avantageusement d'éviter une réutilisation fortuite des données d'exécution qui y sont sauvegardées, notamment lors d'une reprise d'exécution ultérieure d'un autre logiciel ou du même logiciel.

Selon un mode de réalisation, le procédé comporte une étape initiale de création et d'attribution d'un emplacement de sauvegarde respectif de la mémoire non-volatile pour chaque logiciel de définition de contexte d'exécution de ladite pluralité de logiciels de définition de contexte d'exécution.

Ce mode de réalisation permet avantageusement de simplifier la mise en oeuvre du procédé. En effet, les emplacements mémoire créé initialement, par exemple lors d'un couplage initial du module à un dispositif électronique, n'auront plus à l'être dans la suite de la mise en oeuvre du procédé.

Selon un mode de réalisation, le procédé comporte pour chaque première suspension d'exécution d'un logiciel de définition de contexte d'exécution en cours d'exécution, une création d'un emplacement de sauvegarde respectif dans la mémoire non volatile et une attribution dudit emplacement de sauvegarde respectif audit logiciel de définition de contexte d'exécution en cours d'exécution.

Ce mode de réalisation permet avantageusement une plus grande souplesse dans la mise en oeuvre du procédé et évite notamment, dans le cas où l'exécution d'un ou plusieurs logiciels ne serait pas suspendue, la création inutile d'emplacements de sauvegarde qui ne seront pas utilisés.

Selon un mode de réalisation, ladite suspension comporte la création par le module à circuit intégré d'une première étiquette de contrôle associée au premier logiciel de définition de contexte d'exécution et un envoi de ladite première étiquette de contrôle au dispositif électronique, et dans lequel ladite reprise d'exécution du deuxième logiciel de définition de contexte d'exécution comporte un envoi par le dispositif électronique au module à circuit intégré d'une deuxième étiquette de contrôle précédemment créée, et un contrôle par le module à circuit intégré de la correspondance entre la deuxième étiquette de contrôle et le deuxième logiciel de définition de contexte d'exécution.

Dans une variante de réalisation, l'étiquette de contrôle est un jeton d'authentification (« token », en langue anglaise), le procédé comportant alors au moins un échange d'au moins une information entre le module à circuit intégré et le dispositif électronique permettant par exemple la génération d'une clé de session. Le procédé peut comporter une authentification du jeton, par exemple à l'aide d'un HMAC (« keyed-Hash Message Authentication Code » en langue anglaise, ou « code d'authentification d'une empreinte cryptographique de message avec clé », en langue française), et optionnellement son chiffrement à l'aide de ladite clé de session.

La création d'étiquettes de contrôle permet avantageusement d'assurer que les reprises d'exécution des logiciels se fassent sur la base du bon contexte d'exécution, et non sur la base d'un contexte d'exécution erroné, par exemple correspondant à un autre logiciel. La fiabilité du procédé est ainsi améliorée.

Selon un aspect, il est proposé un module à circuit intégré comprenant une interface de communication et un processeur configuré pour accéder à une mémoire non-volatile dans laquelle sont mémorisés une pluralité de logiciels de définition de contexte d'exécution adaptés à être exécutés par le processeur pour une communication via l'interface de communication, et pour accéder à une mémoire volatile configurée pour stocker des données d'exécution d'un logiciel de définition de contexte d'exécution en cours d'exécution, le module étant configuré pour, à réception d'une commande sur son interface de communication, la pluralité de logiciels de définition de contexte d'exécution comprenant un premier logiciel de définition de contexte d'exécution en cours d'exécution et un deuxième logiciel de définition de contexte d'exécution précédemment suspendu,
a. suspendre l'exécution du premier logiciel de définition de contexte d'exécution en cours d'exécution, la suspension comprenant
   i. une sauvegarde du contenu de la mémoire volatile dans un premier emplacement de sauvegarde de la mémoire non-volatile,
   ii. un arrêt de l'exécution du premier logiciel de définition de contexte d'exécution,
b. reprendre l'exécution précédemment suspendue du deuxième logiciel de définition de contexte d'exécution, la reprise de l'exécution comprenant
   i. un transfert dans la mémoire volatile, depuis un deuxième emplacement de sauvegarde de la mémoire non-volatile, de données d'exécution relatives à l'exécution précédemment suspendue du deuxième logiciel de définition de contexte d'exécution, et
   ii. une exécution du deuxième logiciel de définition de contexte d'exécution, le module étant configurer pour effacer le contenu du deuxième emplacement de sauvegarde à la suite de la reprise d'exécution du deuxième logiciel de définition de contexte d'exécution.

La pluralité de logiciels de définition de contexte d'exécution peut comporter au moins un logiciel de définition de profil de communication.

Le module à circuit intégré peut comporter ladite mémoire volatile et/ou ladite mémoire non volatile.

Selon un mode de réalisation, le module à circuit intégré est configuré pour créer et attribuer un emplacement de sauvegarde respectif de la mémoire non volatile pour chaque logiciel de définition de contexte d'exécution de ladite pluralité de logiciels de définition de contexte d'exécution.

Selon un mode de réalisation, le module à circuit intégré est configuré pour créer et attribuer, à chaque première suspension d'un logiciel de définition de contexte d'exécution en cours d'exécution, un emplacement de sauvegarde respectif dans la mémoire non volatile et pour attribuer ledit emplacement de sauvegarde respectif audit logiciel de définition de contexte d'exécution en cours d'exécution.

Selon un mode de réalisation, le module à circuit intégré est configuré pour
a. créer, lors de ladite suspension d'exécution du premier logiciel de définition de contexte d'exécution, une première étiquette de contrôle associée au premier logiciel de définition de contexte d'exécution et pour envoyer ladite première étiquette de contrôle vers l'interface de communication,
b. recevoir de l'interface de communication une deuxième étiquette de contrôle précédemment créée et contrôler la correspondance entre la deuxième étiquette de contrôle et le deuxième logiciel de définition de contexte d'exécution, et
c. reprendre l'exécution du deuxième logiciel de définition de contexte d'exécution si la deuxième étiquette de contrôle correspond au deuxième logiciel de définition de contexte d'exécution.

Selon un aspect, il est proposé un système comprenant un module à circuit intégré selon l'invention et un dispositif électronique configuré pour communiquer avec le module à circuit intégré via l'interface de communication.

Selon un mode de réalisation, le dispositif est configuré pour envoyer ladite commande qui comporte un premier champ comprenant une information relative à la suspension du premier logiciel de définition de contexte d'exécution et un deuxième champ comprenant une information d'identification du deuxième logiciel de définition de contexte d'exécution.

Ainsi il est possible de commander la suspension et la reprise d'exécution par l'envoi d'une seule et même commande.

Selon un aspect, il est proposé un programme d'ordinateur comprenant des instructions conduisant à la mise en oeuvre du procédé selon l'invention lorsque le programme est exécuté par ledit processeur.

Les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des figures

De plus, diverses autres caractéristiques de l'invention ressortent de la description annexée effectuée en référence aux dessins qui illustrent des formes, non limitatives, de réalisation de l'invention et où :
la figure 1 est un diagramme illustrant l'architecture d'un système comportant un module à circuit intégré selon l'invention et un dispositif électronique, et
la figure 2 illustre un mode de mise en oeuvre du procédé selon l'invention.

Il est à noter que sur ces figures les éléments structurels et/ou fonctionnels communs aux différentes variantes peuvent présenter les mêmes références.

### Description détaillée

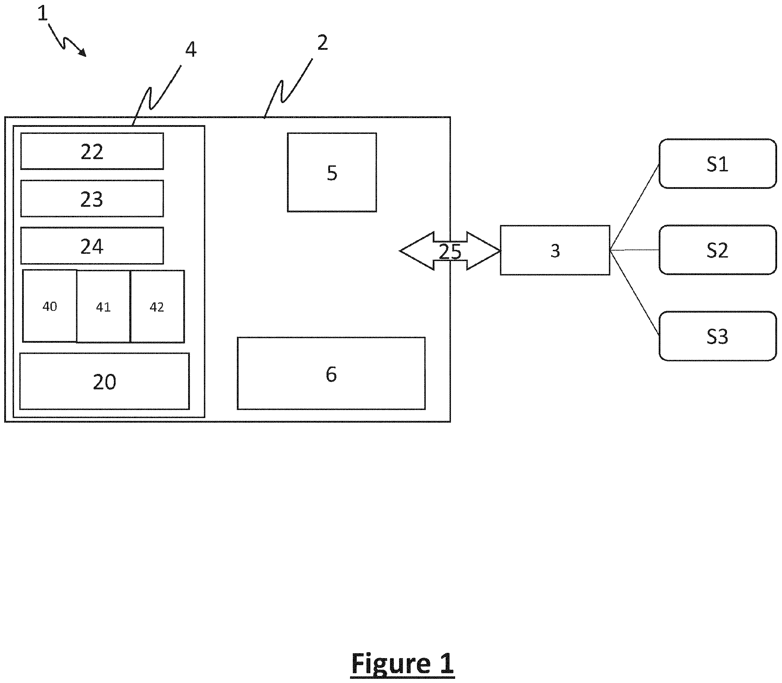

La figure 1 représente un système 1 selon l'invention, comportant un module à circuit intégré 2 configuré pour établir une communication avec un dispositif électronique 3, par exemple ici un téléphone mobile intelligent (« Smartphone », en langue anglaise), permettant lui-même d'accéder à une pluralité de services S1, S2, S3.

A titre d'exemple, un premier service S1 correspond à l'accès à un premier réseau téléphonique géré par un premier opérateur de téléphonie mobile, un deuxième service S2 correspond à l'accès à un deuxième réseau téléphonique géré par un deuxième opérateur de téléphonie mobile, et un troisième service S3 correspond à l'accès à un système d'autorisation de paiement bancaire géré par une banque.

Le dispositif électronique comporte plusieurs interfaces de communication lui permettant d'accéder aux divers services S1, S2, S3. Par exemple, le dispositif électronique comporte une première interface de communication, ici un premier émetteur-récepteur couplé à une antenne de télécommunication, permettant d'accéder au premier service S1 et au deuxième service S2, et un deuxième émetteur-récepteur couplé à une antenne de communication en champ proche (NFC, « Near Field Communication » selon l'acronyme anglo-saxon employé par l'homme du métier) permettant d'établir des communications en champ proche avec des terminaux de paiement.

Le module à circuit intégré 2 est ici une puce électronique comportant, une mémoire non volatile 4, un processeur 5 et une mémoire volatile 6. Le module à circuit intégré 2 est ici fixé à demeure, par exemple soudé, au dispositif électronique 3.

Le module à circuit intégré 2 comporte un système d'exploitation dit «système d'exploitation bas-niveau » 20 stocké dans la mémoire non volatile 4 et configuré pour être exécuté par le processeur 5 afin notamment de commander et contrôler le fonctionnement logiciel du module 2.

La mémoire non volatile 4 comporte en outre une pluralité de logiciels de définition de contexte d'exécution 22, 23, 24, autrement appelés « système d'exploitation haut niveau », configurés pour être exécutés par le processeur 5. La mémoire non volatile 4 comporte une pluralité d'emplacements de sauvegarde 40, 41, 42. Ces emplacements ont été créés par le microprocesseur 5, comme il sera vu ci-après.

Un premier logiciel 22 est ici conçu pour définir un premier profil de communication et permet une communication sécurisée avec le premier service S1. Un deuxième logiciel 23 est conçu pour définir un deuxième profil de communication et permet une communication sécurisée avec le deuxième service S2. Un troisième logiciel 24 est ici un profil de paiement bancaire et permet l'établissement d'une communication sécurisée avec le troisième service S3.

Les logiciels de définition de contexte d'exécution 22, 23, 24 comportent chacun notamment des informations relatives à un abonné, typiquement le propriétaire du module sécurisé, des informations relatives aux fournisseurs des services S1 à S3 qui sont ici respectivement le premier opérateur téléphonique, le deuxième opérateur téléphonique et la banque, ainsi que des clés d'identification permettant de mettre en place lesdites communications sécurisées.

Le module à circuit intégré 2 comporte en outre une interface de communication 25 permettant une communication avec le dispositif électronique 3. Dans l'exemple illustré, l'interface de communication 25 est conforme à la norme ISO 7816 et permet une communication avec le dispositif électronique 3 conformément à cette norme. En variante, l'interface 25 peut être de type SWP (« Single Wire Protocol », en langue anglaise), de type I2C (« Inter-Integrated Circuit » en langue anglaise), de type USB (« Universal Serial Bus » en langue anglaise) ou de type SPI (« Serial Peripheral Interface », en langue anglaise). Le module 2 peut par ailleurs comprendre plusieurs interfaces, notamment plusieurs interfaces de types différents.

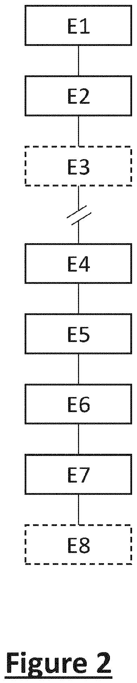

La figure 2 illustre un procédé mis en oeuvre dans le module à circuit intégré 2 par le processeur 5. Ce procédé permet de basculer entre les exécutions des différents logiciels de définition de contexte d'exécution.

Initialement, le processeur 5 exécute l'un des logiciels de définition de contexte d'exécution, par exemple ici le deuxième logiciel 23. Lors de ladite exécution, diverses données d'exécution sont stockées dans la mémoire volatile 6 et modifiées selon le déroulement de l'exécution du deuxième logiciel 23. Par exemple, ces informations peuvent comporter une indication selon laquelle le code PIN de l'utilisateur a été vérifié, une information sur une adresse d'un fichier électronique en cours de lecture par le processeur 5, ou alors une clé de session d'accès du deuxième logiciel 23 au deuxième service S2.

La pluralité d'emplacement de sauvegarde 40, 41, 42 est créée dans la mémoire non-volatile. Ici, un premier emplacement de sauvegarde 40 est attribué au premier logiciel 22, un deuxième emplacement de sauvegarde 41 est attribué au deuxième logiciel 23 et un troisième emplacement de sauvegarde est attribué au troisième logiciel 24.

Lors d'une première étape E1, une commande de suspension est reçue et traitée par le processeur 5. Cette commande de suspension est émise par le dispositif électronique 3 via l'interface de communication 25, par exemple en réponse à une commande reçue depuis le premier réseau de communication mobile S1.

Lors d'une deuxième étape E2, en réponse à ladite commande, le module à circuit intégré 2 sauvegarde le contenu de la mémoire vive 6 dans le deuxième emplacement de sauvegarde 41 de la mémoire non-volatile 4 et arrête l'exécution du deuxième logiciel 23. Les données sauvegardées correspondent donc au statut du deuxième logiciel 23 à l'instant de la suspension.

Lors d'une troisième étape E3, optionnelle, le processeur 5 fournit au dispositif électronique 3 des informations sur les autres logiciels, par exemple le nombre de logiciels et s'ils ont déjà été exécutés et suspendus. Sur la figure 2, le caractère optionnel de la troisième étape E3 est représenté par un contour en pointillés de la case correspondant à la troisième étape E3.

Lors d'une quatrième étape E4, le module à circuit intégré 2 exécute un autre logiciel de définition de contexte d'exécution, par exemple ici le premier logiciel 22. L'exécution peut par exemple avoir été préalablement déclenchée en réponse à une commande d'exécution reçue sur l'interface de communication 25. Par exemple, l'exécution en cours du premier logiciel 22 est une première exécution ; en d'autres termes, le premier logiciel 22 n'a pas encore été suspendu. Le premier emplacement mémoire 40 ne contient donc pas de données d'exécution sauvegardées.

Par ailleurs, cette quatrième étape E4 n'est pas nécessairement implémentée directement à la suite de la troisième étape E3. Ainsi, entre l'étape E3 et l'étape E4, le module à circuit intégré 2 peut réaliser diverses autres opérations de traitement.

Ainsi, lors de l'étape E4, indépendamment des opérations réalisées par le module 2 entre l'étape E3 et l'étape E4, le premier logiciel 22 est en cours d'exécution et les données relatives à l'exécution précédemment suspendue du deuxième logiciel 23 sont sauvegardées dans le deuxième emplacement mémoire 41.

Lors d'une cinquième étape E5, le processeur 5 reçoit une commande de basculement de logiciel, c'est-à-dire une commande comportant un premier champ comprenant une information relative à une suspension du logiciel en cours d'exécution et un deuxième champ comportant une information relative à une reprise d'exécution d'un logiciel précédemment suspendu.

Ici, le premier champ comporte un ordre de suspension du premier logiciel 22 et le deuxième champ comporte un ordre de reprise de l'exécution du deuxième logiciel 23. En variante, les ordres de suspension et de reprise pourraient être contenus dans deux commandes distinctes.

Lors d'une sixième étape E6, du fait de la réception de l'ordre de suspension du premier logiciel 22, le processeur 5 du module 2, sous commande du système d'exploitation bas niveau 20, sauvegarde le contenu de la mémoire volatile 6 dans le premier emplacement de sauvegarde 40 de la mémoire non volatile 4 et arrête l'exécution du premier logiciel 22. Les données sauvegardées correspondent donc au statut du premier logiciel 22 à l'instant de la suspension.

Lors d'une septième étape E7, le processeur 5 procède à la reprise de l'exécution du deuxième logiciel 23 en transférant les données d'exécution présentes dans le deuxième emplacement 41 de sauvegarde vers la mémoire volatile 6. Puis, le module à circuit intégré 2 exécute le deuxième logiciel 23 en utilisant les données d'exécution contenues dans la mémoire volatile 6.

Lors d'une huitième étape E8 optionnelle, le module à circuit intégré 2 efface le contenu du deuxième emplacement 41 de sauvegarde.

Il peut arriver que le champ de la commande de basculement relatif à l'application dont l'exécution doit être reprise, transmise au processeur 5 lors de l'étape E5, ne contienne aucune information. Par exemple, le champ vide peut résulter d'un dysfonctionnement du module à circuit intégré, ou bien de l'implémentation d'un fonctionnement de routine du module dans lequel aucun logiciel n'est sélectionné.

Dans ce cas, le processeur 5 est configuré pour reprendre la dernière application suspendue. En variante, le processeur est configuré pour reprendre ou pour initialiser un logiciel dit « logiciel par défaut », préalablement défini. Selon une autre variante, le processeur est configuré pour ne pas tenir compte de la commande de basculement.

Les modes de mise en oeuvre et de réalisation de l'invention ne sont pas limités à ceux présentés ci-avant.

Ainsi, selon un autre mode de réalisation envisageable, le procédé met en oeuvre un contrôle du logiciel dont la reprise est commandée. Par exemple, la deuxième étape E2 de suspension du deuxième logiciel 23 comporte dans ce cas la création par le module à circuit intégré 2 d'une étiquette de contrôle, ou en d'autre terme d'une valeur d'identification, associée au deuxième logiciel 23 et une transmission de ladite étiquette de contrôle au dispositif électronique 3.

Et lors de la cinquième étape E5, le dispositif électronique 3 transmet l'étiquette de contrôle au module à circuit intégré. Par exemple, l'étiquette de contrôle peut être contenue dans la commande de basculement, ou bien contenue dans une commande distincte.

La septième étape E7 de reprise d'exécution du deuxième logiciel 23 comporte alors un contrôle, par le processeur 5, de la correspondance de ladite étiquette de contrôle avec le deuxième logiciel 23. Dans ce mode de réalisation, la reprise d'exécution du deuxième logiciel 23 est conditionnée à une issue positive du contrôle, c'est-à-dire à une correspondance entre l'étiquette de contrôle et le deuxième logiciel 23.

En cas d'issue négative du contrôle, c'est-à-dire en cas de non-correspondance entre l'étiquette de contrôle et le deuxième logiciel 23, le processeur 5 du module à circuit intégré 2 interrompt la reprise d'exécution. Par exemple, le processeur 5 du module à circuit intégré 2 efface le contenu du deuxième emplacement mémoire 41 et exécute le deuxième logiciel à partir de son état initial, c'est-à-dire un état dans lequel se trouve le logiciel préalablement à toute exécution. En variante, le processeur 5 peut lancer l'exécution d'un logiciel par défaut, ou encore poursuivre l'exécution du logiciel en cours.

En variante, un autre mode de réalisation est envisageable concernant le contrôle de l'étiquette de contrôle. Ce dernier peut être réalisé pendant la sixième étape E6 de suspension du premier logiciel 22. Ainsi en cas d'issue négative du contrôle, le premier logiciel 22 n'est pas suspendu et son exécution se poursuit.

Bien qu'il ait été décrit ici des modes de mise en oeuvre et de réalisation de l'invention dans lesquels le dispositif électronique 3 est un téléphone portable intelligent, l'invention s'applique à tout dispositif électronique adapté à coopérer avec un module sécurisé. En particulier, le dispositif électronique 3 peut être un terminal de paiement, un ordinateur, un compteur de consommation électrique ou tout objet connecté.

Et, bien qu'il ait été décrit ici des modes de mise en oeuvre et de réalisation de l'invention dans lesquels le module à circuit intégré 2 est intégré au dispositif électronique 3, l'invention est compatible avec un module à circuit intégré amovible de type carte à puce, telle qu'une carte SIM, disposée par exemple de manière amovible dans un logement dédié ménagé dans le dispositif électronique 3. Le module à circuit intégré selon l'invention peut notamment être un ensemble de module physiquement distincts, par exemple plusieurs cartes à puce, abritant chacun un ou plusieurs logiciels de définition de contexte d'exécution. Plus généralement, l'invention est aussi compatible avec les différents types de modules à circuit intégré mentionnés précédemment.

Par ailleurs, dans le procédé décrit en lien avec la figure 2, la pluralité d'emplacement de sauvegarde 40, 41, 42 est créé dans la mémoire non-volatile préalablement à l'étape E1, c'est-à-dire lors d'une étape initiale. En variante, il est possible que l'ensemble des emplacements de sauvegarde ne soit pas créé initialement mais que chaque première suspension d'exécution d'un logiciel en cours d'exécution entraine une création, par le processeur 5, d'un emplacement de sauvegarde respectif dans la mémoire non volatile et une attribution de cet emplacement de sauvegarde respectif au logiciel en cours d'exécution dont la suspension est commandée. Ainsi, dans une mise en oeuvre du procédé dans laquelle le troisième logiciel 24 n'est jamais ou n'a jamais encore été exécuté, ou dans laquelle le troisième logiciel 24 est en cours d'exécution mais non encore suspendu, le troisième emplacement mémoire 42 n'est pas créé.

Le module à circuit intégré 2 a été décrit ici comme comportant la mémoire volatile 6 et la mémoire non-volatile 4. En variante, il est possible que la mémoire volatile et/ou la mémoire non-volatile soient situées pour tout ou partie hors du module à circuit intégré 2, par exemple sur le dispositif électronique 3.

Le module à circuit intégré peut être configuré pour accéder à toutes sortes de services autres que les services d'accès aux réseaux de télécommunication et au service de paiement bancaire décrit précédemment. Par exemple, l'invention est compatible avec des services de fidélité d'enseignes commerciales, dans ce cas le logiciel associé fait office de carte de fidélité électronique, des services administratifs officiels, dans ce cas le logiciel associé peut faire office de passeport électronique, de permis de conduire électronique, de carte d'électeur électronique ou bien de carte d'identité électronique.

Diverses autres modifications peuvent être apportées à l'invention dans le cadre des revendications annexées.

## Revendications

1. Procédé mis en oeuvre dans un module à circuit intégré (2) comprenant un processeur configuré pour accéder à une mémoire non-volatile (4) dans laquelle sont mémorisés une pluralité de logiciels de définition de contexte d'exécution (22, 23, 24) adaptés à être exécutés par le processeur pour une communication avec un dispositif électronique (3), et pour accéder à une mémoire volatile (6) configurée pour stocker des données d'exécution d'un logiciel de définition de contexte d'exécution en cours d'exécution, la pluralité de logiciels de définition de contexte d'exécution comprenant un premier logiciel de définition de contexte d'exécution (22) en cours d'exécution et un deuxième logiciel de définition de contexte d'exécution (23) précédemment suspendu, le procédé comprenant, à réception d'une commande du dispositif électronique,
a. une suspension de l'exécution du premier logiciel de définition de contexte d'exécution (22) en cours d'exécution comprenant
i. une sauvegarde du contenu de la mémoire volatile (6) dans un premier emplacement de sauvegarde (40) de la mémoire non-volatile (4),
ii. un arrêt de l'exécution du premier logiciel de définition de contexte d'exécution (22),
b. une reprise de l'exécution précédemment suspendue du deuxième logiciel de définition de contexte d'exécution (23) comprenant
i. un transfert dans la mémoire volatile (6), depuis un deuxième emplacement de sauvegarde (41) de la mémoire non-volatile (4), de données d'exécution relatives à l'exécution précédemment suspendue du deuxième logiciel de définition de contexte d'exécution (23), et
ii. une exécution du deuxième logiciel de définition de contexte d'exécution (23),
le procédé comportant un effacement du contenu du deuxième emplacement de sauvegarde (41) à la suite de la reprise d'exécution du deuxième logiciel de définition de contexte d'exécution (23).

2. Procédé selon la revendication 1, dans lequel la pluralité de logiciels de définition de contexte d'exécution (22, 23, 24) comporte au moins un logiciel (22) de définition de profil de communication.

3. Procédé selon la revendication 1 ou 2, dans lequel le module à circuit intégré (2) comporte ladite mémoire volatile (6) ou ladite mémoire non volatile (4).

4. Procédé selon l'une quelconque des revendications 1 à 3, comportant une étape initiale de création et d'attribution d'un emplacement de sauvegarde respectif (40, 41, 42) de la mémoire non-volatile pour chaque logiciel de définition de contexte d'exécution (22, 23, 24) de ladite pluralité de logiciels de définition de contexte d'exécution.

5. Procédé selon l'une quelconque des revendications 1 à 3, comportant pour chaque première suspension d'exécution d'un logiciel de définition de contexte d'exécution en cours d'exécution, une création d'un emplacement de sauvegarde respectif (40, 41, 42) dans la mémoire non volatile et une attribution dudit emplacement de sauvegarde respectif audit logiciel de définition de contexte d'exécution en cours d'exécution (22, 23, 24).

6. Procédé selon l'une quelconque des revendications 1 à 5, dans lequel ladite suspension comporte la création par le module à circuit intégré (2) d'une première étiquette de contrôle associée au premier logiciel de définition de contexte d'exécution (22) et un envoi de ladite première étiquette de contrôle au dispositif électronique (3), et dans lequel ladite reprise d'exécution du deuxième logiciel de définition de contexte d'exécution (23) comporte un envoi par le dispositif électronique (3) au module à circuit intégré (2) d'une deuxième étiquette de contrôle précédemment créée, et un contrôle par le module à circuit intégré (3) de la correspondance entre la deuxième étiquette de contrôle et le deuxième logiciel de définition de contexte d'exécution (23).

7. Module à circuit intégré comprenant une interface de communication (25) et un processeur configuré pour accéder à une mémoire non-volatile (4) dans laquelle sont mémorisés une pluralité de logiciels de définition de contexte d'exécution (22, 23, 24) adaptés à être exécutés par le processeur pour une communication via l'interface de communication (25), et pour accéder à une mémoire volatile (6) configurée pour stocker des données d'exécution d'un logiciel de définition de contexte d'exécution en cours d'exécution, le module (2) étant configuré pour, à réception d'une commande sur son interface de communication (25), la pluralité de logiciels de définition de contexte d'exécution (22, 23, 24) comprenant un premier logiciel de définition de contexte d'exécution (22) en cours d'exécution et un deuxième logiciel de définition de contexte d'exécution (23) précédemment suspendu,
a. suspendre l'exécution du premier logiciel de définition de contexte d'exécution (22) en cours d'exécution, la suspension comprenant
i. une sauvegarde du contenu de la mémoire volatile (6) dans un premier emplacement de sauvegarde (40) de la mémoire non-volatile (4),
ii. un arrêt de l'exécution du premier logiciel de définition de contexte d'exécution (22),
b. reprendre l'exécution précédemment suspendue du deuxième logiciel de définition de contexte d'exécution (23), la reprise de l'exécution comprenant
i. un transfert dans la mémoire volatile (6), depuis un deuxième emplacement de sauvegarde (41) de la mémoire non-volatile (4), de données d'exécution relatives à l'exécution précédemment suspendue du deuxième logiciel de définition de contexte d'exécution (23), et
ii. une exécution du deuxième logiciel de définition de contexte d'exécution (23), le module étant configuré pour effacer le contenu du deuxième emplacement de sauvegarde (41) à la suite de la reprise d'exécution du deuxième logiciel de définition de contexte d'exécution (23).

8. Module à circuit intégré selon la revendication 7, dans lequel la pluralité de logiciels de définition de contexte d'exécution (22, 23, 24) comporte au moins un logiciel (23) de définition de profil de communication.

9. Module à circuit intégré selon la revendication 7 ou 8, comportant ladite mémoire volatile (6) ou ladite mémoire non volatile (4).

10. Module à circuit intégré selon l'une quelconque des revendications 7 à 9, configuré pour créer et attribuer un emplacement de sauvegarde respectif (40, 41, 42) de la mémoire non volatile (4) pour chaque logiciel de définition de contexte d'exécution de ladite pluralité de logiciels de définition de contexte d'exécution (22, 23, 24).

11. Module à circuit intégré selon l'une quelconque des revendications 7 à 9, configuré pour créer et attribuer, à chaque première suspension d'un logiciel de définition de contexte d'exécution en cours d'exécution, un emplacement de sauvegarde respectif dans la mémoire non volatile et pour attribuer ledit emplacement de sauvegarde respectif audit logiciel de définition de contexte d'exécution en cours d'exécution.

12. Module à circuit intégré selon l'une quelconque des revendications 8 à 11, configuré pour
a. créer, lors de ladite suspension d'exécution du premier logiciel de définition de contexte d'exécution (22), une première étiquette de contrôle associée au premier logiciel de définition de contexte d'exécution (22) et pour envoyer ladite première étiquette de contrôle vers l'interface de communication (25),
b. recevoir de l'interface de communication (25) une deuxième étiquette de contrôle précédemment créée et contrôler la correspondance entre la deuxième étiquette de contrôle et le deuxième logiciel de définition de contexte d'exécution (23), et
c. reprendre l'exécution du deuxième logiciel de définition de contexte d'exécution (23) si la deuxième étiquette de contrôle correspond au deuxième logiciel de définition de contexte d'exécution.

13. Système comprenant un module à circuit intégré (2) selon l'une quelconque des revendications 8 à 12 et un dispositif électronique (3) configuré pour communiquer avec le module à circuit intégré via l'interface de communication (25).

14. Système selon la revendication 13, dans lequel le dispositif électronique (3) est configuré pour envoyer ladite commande qui comporte un premier champ comprenant une information relative à la suspension du premier logiciel de définition de contexte d'exécution et un deuxième champ comprenant une information d'identification du deuxième logiciel de définition de contexte d'exécution (23).

15. Programme d'ordinateur comprenant des instructions conduisant à la mise en oeuvre du procédé selon l'une quelconque des revendications 1 à 6 lorsque le programme est exécuté par ledit processeur.

## Patentansprüche

1. Prozess, der in einem integrierten Schaltungsmodul (2) implementiert wird, das einen Prozessor umfasst, der dazu konfiguriert ist, auf einen nichtflüchtigen Speicher (4) zuzugreifen, in dem eine Vielzahl von Softwareprogrammen zur Ausführungskontextdefinition (22, 23, 24) gespeichert sind, die dazu geeignet sind, für eine Kommunikation mit einer elektronischen Vorrichtung (3) durch den Prozessor ausgeführt zu werden, und auf einen flüchtigen Speicher (6) zuzugreifen, der dazu konfiguriert ist, Ausführungsdaten eines Softwareprogramms zur Ausführungskontextdefinition im Verlauf der Ausführung zu speichern, wobei die Vielzahl von Softwareprogrammen zur Ausführungskontextdefinition ein erstes Softwareprogramm zur Ausführungskontextdefinition (22) im Verlauf der Ausführung und ein zuvor ausgesetztes zweites Softwareprogramm zur Ausführungskontextdefinition (23) umfasst, wobei das Verfahren bei Empfang eines Befehls der elektronischen Vorrichtung umfasst:
a. Aussetzen der Ausführung des ersten Softwareprogramms zur Ausführungskontextdefinition (22) im Verlauf der Ausführung, umfassend
i. Sichern des Inhalts des flüchtigen Speichers (6) an einem ersten Sicherungsort (40) des nichtflüchtigen Speichers (4),
ii. Anhalten der Ausführung des ersten Softwareprogramms zur Ausführungskontextdefinition (22),
b. Wiederaufnehmen der zuvor ausgesetzten Ausführung des zweiten Softwareprogramms zur Ausführungskontextdefinition (23), umfassend
i. Übertragen von Ausführungsdaten bezüglich der zuvor ausgesetzten Ausführung des zweiten Softwareprogramms zur Ausführungskontextdefinition (23) von einem zweiten Sicherungsort (41) des nichtflüchtigen Speichers (4) in den flüchtigen Speicher (6) und
ii. Ausführen des zweiten Softwareprogramms zur Ausführungskontextdefinition (23), wobei das Verfahren ein Löschen des Inhalts des zweiten Sicherungsortes (41) infolge des Wiederaufnehmens der Ausführung des zweiten Softwareprogramms zur Ausführungskontextdefinition (23) umfasst.

2. Verfahren nach Anspruch 1, wobei die Vielzahl von Softwareprogrammen zur Ausführungskontextdefinition (22, 23, 24) mindestens ein Softwareprogramm (22) zur Definition eines Kommunikationsprofils umfasst.

3. Verfahren nach Anspruch 1 oder 2, wobei das integrierte Schaltungsmodul (2) den flüchtigen Speicher (6) oder den nichtflüchtigen Speicher (4) umfasst.

4. Verfahren nach einem der Ansprüche 1 bis 3, das einen ersten Schritt des Erzeugens und Zuweisens eines entsprechenden Sicherungsortes (40, 41, 42) des nichtflüchtigen Speichers für jedes Softwareprogramm zur Ausführungskontextdefinition (22, 23, 24) der Vielzahl von Softwareprogrammen zur Ausführungskontextdefinition umfasst.

5. Verfahren nach einem der Ansprüche 1 bis 3, das für jedes erste Aussetzen der Ausführung eines Softwareprogramms zur Ausführungskontextdefinition im Verlauf der Ausführung Erzeugen eines entsprechenden Sicherungsortes (40, 41, 42) im nichtflüchtigen Speicher und Zuweisen des entsprechenden Sicherungsortes zum Softwareprogramm zur Ausführungskontextdefinition im Verlauf der Ausführung (22, 23, 24) umfasst.

6. Verfahren nach einem der Ansprüche 1 bis 5, wobei das Aussetzen Erzeugen einer ersten Kontrollmarkierung, die dem ersten Softwareprogramm zur Ausführungskontextdefinition (22) zugeordnet ist, durch das integrierte Schaltungsmodul (2) und Senden der ersten Kontrollmarkierung an die elektronische Vorrichtung (3) umfasst und wobei das Wiederaufnehmen der Ausführung des zweiten Softwareprogramms zur Ausführungskontextdefinition (23) Senden einer zuvor erstellten zweiten Kontrollmarkierung durch die elektronische Vorrichtung (3) an das integrierte Schaltungsmodul (2) und Kontrollieren der Entsprechung zwischen der zweiten Kontrollmarkierung und dem zweiten Softwareprogramm zur Ausführungskontextdefinition (23) durch das integrierte Schaltungsmodul (3) umfasst.

7. Integriertes Schaltungsmodul, das eine Kommunikationsschnittstelle (25) und einen Prozessor umfasst, der dazu konfiguriert ist, auf einen nichtflüchtigen Speicher (4) zuzugreifen, in dem eine Vielzahl von Softwareprogrammen zur Ausführungskontextdefinition (22, 23, 24) gespeichert sind, die dazu eingerichtet sind, für eine Kommunikation über die Kommunikationsschnittstelle (25) durch den Prozessor ausgeführt zu werden, und auf einen flüchtigen Speicher (6) zuzugreifen, der dazu konfiguriert ist, Ausführungsdaten eines Softwareprogramms zur Ausführungskontextdefinition im Verlauf der Ausführung zu speichern, wobei das Modul (2) bei Empfang eines Befehls an seiner Kommunikationsschnittstelle (25), wobei die Vielzahl von Softwareprogrammen zur Ausführungskontextdefinition (22, 23, 24) ein erstes Softwareprogramm zur Ausführungskontextdefinition (22) im Verlauf der Ausführung und ein zuvor ausgesetztes zweites Softwareprogramm zur Ausführungskontextdefinition (23) umfasst, zu Folgendem konfiguriert ist:
a. Aussetzen der Ausführung des ersten Softwareprogramms zur Ausführungskontextdefinition (22) im Verlauf der Ausführung, wobei das Aussetzen umfasst:
i. Sichern des Inhalts des flüchtigen Speichers (6) an einem ersten Sicherungsort (40) des nichtflüchtigen Speichers (4),
ii. Anhalten der Ausführung des ersten Softwareprogramms zur Ausführungskontextdefinition (22),
b. Wiederaufnehmen der zuvor ausgesetzten Ausführung des zweiten Softwareprogramms zur Ausführungskontextdefinition (23), wobei das Wiederaufnehmen der Ausführung umfasst:
i. Übertragen von Ausführungsdaten bezüglich der zuvor ausgesetzten Ausführung des zweiten Softwareprogramms zur Ausführungskontextdefinition (23) von einem zweiten Sicherungsort (41) des nichtflüchtigen Speichers (4) in den flüchtigen Speicher (6) und
ii. Ausführen des zweiten Softwareprogramms zur Ausführungskontextdefinition (23), wobei das Modul dazu konfiguriert ist, den Inhalt des zweiten Sicherungsortes (41) infolge des Wiederaufnehmens der Ausführung des zweiten Softwareprogramms zur Ausführungskontextdefinition (23) zu löschen.

8. Integriertes Schaltungsmodul nach Anspruch 7, wobei die Vielzahl von Softwareprogrammen zur Ausführungskontextdefinition (22, 23, 24) mindestens ein Softwareprogramm (23) zur Definition eines Kommunikationsprofils umfasst.

9. Integriertes Schaltungsmodul nach Anspruch 7 oder 8, das den flüchtigen Speicher (6) oder den nichtflüchtigen Speicher (4) umfasst.

10. Integriertes Schaltungsmodul nach einem der Ansprüche 7 bis 9, das dazu konfiguriert ist, einen entsprechenden Sicherungsort (40, 41, 42) des nichtflüchtigen Speichers (4) für jedes Softwareprogramm zur Ausführungskontextdefinition aus der Vielzahl von Softwareprogrammen zur Ausführungskontextdefinition (22, 23, 24) zu erzeugen und zuzuweisen.

11. Integriertes Schaltungsmodul nach einem der Ansprüche 7 bis 9, das dazu konfiguriert ist, bei jedem ersten Aussetzen eines Softwareprogramms zur Ausführungskontextdefinition im Verlauf der Ausführung einen entsprechenden Sicherungsort im nichtflüchtigen Speicher zu erzeugen und den entsprechenden Sicherungsort dem Softwareprogramm zur Ausführungskontextdefinition im Verlauf der Ausführung zuzuweisen.

12. Integriertes Schaltungsmodul nach einem der Ansprüche 8 bis 11, das zu Folgendem konfiguriert ist:
a. Erzeugen einer ersten Kontrollmarkierung, die dem ersten Softwareprogramm zur Ausführungskontextdefinition (22) zugeordnet ist, und Senden der ersten Kontrollmarkierung an die Kommunikationsschnittstelle (25) beim Aussetzen des ersten Softwareprogramms zur Ausführungskontextdefinition (22),
b. Empfangen einer zuvor erzeugten zweiten Kontrollmarkierung von der Kommunikationsschnittstelle (25) und Kontrollieren der Entsprechung zwischen der zweiten Kontrollmarkierung und dem zweiten Softwareprogramm zur Ausführungskontextdefinition (23) und
c. Wiederaufnehmen der Ausführung des zweiten Softwareprogramms zur Ausführungskontextdefinition (23), wenn die zweite Kontrollmarkierung dem zweiten Softwareprogramm zur Definition des Ausführungskontextes entspricht.

13. System, das ein integriertes Schaltungsmodul (2) nach einem der Ansprüche 8 bis 12 und eine elektronische Vorrichtung (3) umfasst, die dazu konfiguriert ist, über die Kommunikationsschnittstelle (25) mit dem integrierten Schaltungsmodul zu kommunizieren.

14. System nach Anspruch 13, wobei die elektronische Vorrichtung (3) dazu konfiguriert ist, den Befehl, der ein erstes Feld mit einer Information zum Aussetzen des ersten Softwareprogramms zur Ausführungskontextdefinition und ein zweites Feld mit einer Information zur Identifizierung des zweiten Softwareprogramms zur Ausführungskontextdefinition (23) zu senden.

15. Computerprogramm, das Anweisungen umfasst, die zur Implementierung des Verfahrens nach einem der Ansprüche 1 bis 6 führen, wenn das Programm durch den Prozessor ausgeführt wird.

## Claims

1. Process implemented in an integrated circuit module (2) comprising a processor configured to access a nonvolatile memory (4) that stores a plurality of pieces of execution context definition software (22, 23, 24) suited to being executed by the processor for a communication with an electronic device (3), and to access a volatile memory (6) configured to store execution data for a piece of execution context definition software that is being executed, the plurality of pieces of execution context definition software comprising a first piece of execution context definition software (22) that is being executed and a second piece of execution context definition software (23) that has previously been paused, the process comprising, on receiving a command from the electronic device,
a. pausing the execution of the first piece of execution context definition software (22) that is being executed, comprising
i. saving the content of the volatile memory (6) to a first save location (40) in the nonvolatile memory (4),
ii. stopping the execution of the first piece of execution context definition software (22),
b. resuming the previously paused execution of the second piece of execution context definition software (23), comprising
i. transferring to the volatile memory (6), from a second save location (41) in the nonvolatile memory (4), execution data relating to the previously paused execution of the second piece of execution context definition software (23), and
ii. executing the second piece of execution context definition software (23),
the process comprising erasure of the content of the second save location (41) after the execution of the second piece of execution context definition software (23) has been resumed.

2. Process according to Claim 1, wherein the plurality of pieces of execution context definition software (22, 23, 24) comprises at least one piece of communication profile definition software (22).

3. Process according to Claim 1 or 2, wherein the integrated circuit module (2) comprises said volatile memory (6) or said nonvolatile memory (4).

4. Process according to any one of Claims 1 to 3, comprising an initial step of creating and assigning a respective save location (40, 41, 42) in the nonvolatile memory for each piece of execution context definition software (22, 23, 24) from said plurality of pieces of execution context definition software.

5. Process according to any one of Claims 1 to 3, comprising, for each time the execution of a piece of execution context definition software that is being executed is first paused, creating a respective save location (40, 41, 42) in the nonvolatile memory and assigning said respective save location to said piece of execution context definition software that is being executed (22, 23, 24).

6. Process according to any one of Claims 1 to 5, wherein said pausing comprises the integrated circuit module (2) creating a first control label associated with the first piece of execution context definition software (22), and said first control label being sent to the electronic device (3), and wherein said resumption of the execution of the second piece of execution context definition software (23) comprises the electronic device (3) sending to the integrated circuit module (2) a second control label that has previously been created, and the integrated circuit module (3) checking the match between the second control label and the second piece of execution context definition software (23).

7. Integrated circuit module comprising a communication interface (25) and a processor configured to access a nonvolatile memory (4) that stores a plurality of pieces of execution context definition software (22, 23, 24) suited to being executed by the processor for a communication via the communication interface (25), and to access a volatile memory (6) configured to store execution data for a piece of execution context definition software that is being executed, the module (2) being configured so as, on receiving a command on its communication interface (25), the plurality of pieces of execution context definition software (22, 23, 24) comprising a first piece of execution context definition software (22) that is being executed and a second piece of execution context definition software (23) that has previously been paused,
a. to pause the execution of the first piece of execution context definition software (22) that is being executed, the pausing comprising
i. saving the content of the volatile memory (6) to a first save location (40) in the nonvolatile memory (4),
ii. stopping the execution of the first piece of execution context definition software (22),
b. to resume the previously paused execution of the second piece of execution context definition software (23), the resumption of the execution comprising
i. transferring to the volatile memory (6), from a second save location (41) in the nonvolatile memory (4), execution data relating to the previously paused execution of the second piece of execution context definition software (23), and
ii. executing the second piece of execution context definition software (23),
the module being configured to erase the content of the second save location (41) after the execution of the second piece of execution context definition software (23) has been resumed.

8. Integrated circuit module according to Claim 7, wherein the plurality of pieces of execution context definition software (22, 23, 24) comprises at least one piece of communication profile definition software (23) .

9. Integrated circuit module according to Claim 7 or 8, comprising said volatile memory (6) or said nonvolatile memory (4).

10. Integrated circuit module according to any one of Claims 7 to 9, configured to create and assign a respective save location (40, 41, 42) in the nonvolatile memory (4) for each piece of execution context definition software from said plurality of pieces of execution context definition software (22, 23, 24) .

11. Integrated circuit module according to any one of Claims 7 to 9, configured to create and assign, each time a piece of execution context definition software that is being executed is first paused, a respective save location in the nonvolatile memory and to assign said respective save location to said piece of execution context definition software that is being executed.

12. Integrated circuit module according to any one of Claims 8 to 11, configured to
a. create, at the time of said pausing of the execution of the first piece of execution context definition software (22), a first control label associated with the first piece of execution context definition software (22) and to send said first control label to the communication interface (25),
b. receive from the communication interface (25) a second control label that has previously been created and to check the match between the second control label and the second piece of execution context definition software (23), and
c. resume the execution of the second piece of execution context definition software (23) if the second control label matches the second piece of execution context definition software.

13. System comprising an integrated circuit module (2) according to any one of Claims 8 to 12 and an electronic device (3) configured to communicate with the integrated circuit module via the communication interface (25).

14. System according to Claim 13, wherein the electronic device (3) is configured to send said command, which comprises a first field comprising information relating to the pausing of the first piece of execution context definition software and a second field comprising identification information of the second piece of execution context definition software (23) .

15. Computer program comprising instructions that cause the implementation of the process according to any one of Claims 1 to 6 when the program is executed by said processor.
